# NOUVEAU FASCICULE DE BREVET EUROPEEN

(11) **EP 0 936 107 B2**
(45) Date de publication et mention de la décision concernant l'opposition: **26.08.2009**
(45) Mention de la délivrance du brevet: 25.09.2002
(21) Numéro de dépôt: 99400309.3
(22) Date de dépôt: 10.02.1999
(51) Int. Cl.: B60Q 1/14, F21V 9/00

(54) **Dispositif de rayonnement pour un système d'aide à la vision nocturne pour véhicule**
Strahlungsvorrichtung für ein Nachtsicht-Hilfssystem für Kraftfahrzeug
Radiating device for a night vision aid system for vehicle

(30) Priorité: 12.02.1998 FR 9801684
(43) Date de publication de la demande: 18.08.1999
(73) Titulaire: VALEO VISION, 93000 Bobigny (FR)
(72) Inventeur: Albou, Pierre, 75013 Paris (FR)
(74) Mandataire: Renous Chan, Véronique

(56) Documents cités:
- EP-A- 0 455 524
- EP-A- 0 479 634
- FR-A- 2 652 317
- US-A- 4 692 798
- US-A- 5 448 461

## Description

La présente invention concerne les systèmes d'aide à la vision nocturne pour véhicule.

On connaît d'après le document FR-2 705 293 un système d'aide à la vision, nocturne pour véhicule, comportant un projecteur infrarouge émettant un rayonnement dirigé vers l'environnement devant le véhicule, une caméra infrarouge et un système pour transmettre au conducteur sous forme visible une image reçue par la caméra. Le projecteur comporte une source de lumière blanche et un filtre supprimant une partie visible du rayonnement de la source et transmettant la partie située dans l'infrarouge.

Toutefois, en pratique, un tel filtre laisse souvent passer une partie du rayonnement visible, notamment dans le rouge. Or, sur un projecteur, de telles fuites rouges sont gênantes quelles que soient leur intensité car elles peuvent engendrer une confusion entre l'avant et l'arrière du véhicule, pour les autres véhicules. Par ailleurs, l'amélioration des filtres de ce point de vue, tout en conservant la partie utile du rayonnement infrarouge, à savoir la plage de rayonnement située entre 800 nm et 1 200 nm, est très coûteuse.

Le document EP0479634A1 montré aussi par ailleurs un dispositif d'éclairage infra rouge pour véhicule, comportant au moins une source de rayonnement et un filtre, le dispositif étant adapté à émettre dans un axe de ce même dispositif un rayonnement blanc et infra rouge dans une plage de longueur d'onde à partir de 800 nm.

Un but de l'invention est de fournir un dispositif de rayonnement pour l'aide à la vision nocturne qui soit utilisable à l'avant d'un véhicule sans risque de confusion, et soit peu coûteux.

L'invention a pour objet un dispositif de signalisation, tel qu'un feu, ou dispositif d'éclairage infrarouge, tel qu'un projecteur pour véhicule, comportant au moins une source de rayonnement et un filtre, le dispositif étant adapté à émettre suivant un axe du dispositif un rayonnement blanc et infrarouge dans une plage de longueur d'onde située entre 800 et 1200 nm, le rayonnement blanc ayant une intensité inférieure à 2000 Cd, la source et le filtre étant choisis de sorte que le rayonnement infrarouge a une intensité supérieure à 25 W/sr, et la source étant l'unique source de rayonnement du dispositif.

L'invention a également pour objet un dispositif de signalisation, tel qu'un feu, ou dispositif d'éclairage infrarouge, tel qu'un projecteur pour véhicule, comportant au moins une source de rayonnement et un filtre, le dispositif étant adapté à émettre suivant un axe du dispositif un rayonnement blanc et infrarouge dans une plage de longueur d'onde située entre 800 et 1200 nm, le rayonnement blanc ayant une intensité inférieure à 2000 Cd, la source et le filtre étant choisis de sorte que le rayonnement infrarouge a une intensité supérieure à 25 W/sr, la source étant une première source, le dispositif comportant une deuxième source de rayonnement, le dispositif étant agencé de sorte que la synthèse d'une lumière visible de la première source transmise par le filtre (10) et d'une lumière visible de la deuxième source constitue une lumière blanche, la lumière visible de la deuxième source étant complémentaire de la lumière visible transmise par le filtre.

On sait que le blanc d'un feu de signalisation avant tel qu'une lanterne a une colorimétrie associée à une importante plage de tolérance d'un point de vue réglementaire. Dès lors, même si le filtre présente des fuites dans le rouge, il suffit de respecter les contraintes de colorimétrie réglementaires associées aux feux blancs pour obtenir un feu blanc formant en même temps un dispositif de rayonnement infrarouge et évitant la confusion entre l'avant et l'arrière du véhicule.

Par conséquent, l'invention revirent à fournir un dispositif ayant un rayonnement dont l'intensité dans l'infrarouge est comparable à celle d'un projecteur, et dans le visible est comparable à celle d'un feu et avantageusement d'une lanterne. Ainsi, avantageusement, l'intensité infrarouge, dans la plage 800-1200 nm et dans l'axe, sera supérieure à 50 W/sr, et préférentiellement supérieure à 80 W/sr A titre de comparaison, l'intensité d'un feu classique dans l'infrarouge est généralement de l'ordre de 0,5 à 4 W/sr et celle d'un projecteur de l'ordre de 90 W/sr. De plus, avantageusement dans l'invention, l'intensité dans le blanc, dans l'axe, sera inférieure à 1000 Cd, préférentiellement inférieure à 700 Cd et même inférieure à 100 Cd pour être comparable à celle d'une lanterne (pour laquelle la limite réglementaire supérieure correspondante est fixée à 60 Cd). Dans le visible, l'intensité d'un projecteur classique est d'un point de vue réglementaire supérieure à 7000 Cd. Par exemple, pour un code classique, cette valeur minimum sera de 7500 Cd et, pour un feu de route, elle sera de 30000 Cd.

L'invention peut présenter une ou plusieurs des caractéristiques suivantes
- le filtre est adapté à transmettre une partie visible du rayonnement de la source, la synthèse de cette partie visible constituant une lumière blanchie;
- la source est l'unique source de rayonnement du dispositif;
- la source étant une première source, le dispositif comporte une deuxième source de rayonnement,
- la lumière visible de la deuxième source est complémentaire de la lumière visible transmise par le filtre;
- la deuxième source comporte un filtre coloré;
- le feu comporte un réflecteur ellipsoïdal, la source étant placée à un foyer interne du réflecteur;
- le feu comporte un réflecteur paraboloïdal disposé de sorte qu'un foyer interne du réflecteur paraboloïdal est placé à un foyer externe du réflecteur ellipsoïdal ; la deuxième source est placée dans une trajectoire du rayonnement transmis par le filtre et réfléchi par le réflecteur paraboloïdal ; et le dispositif est destiné à être placé à l'avant d'un véhicule.

On prévoit également selon l'invention un système d'aide à la vision nocturne pour véhicule, comportant un dispositif émetteur adapté à émettre un rayonnement infrarouge, une caméra sensible à l'infrarouge et des moyens d'affichage d'un signal reçu par la caméra, dans lequel le dispositif émetteur est un dispositif de signalisation ou d'éclairage conforme à l'invention.

D'autres caractéristiques et avantages de l'invention apparaîtront encore dans la description suivante de trois modes préférés de réalisation donnés à titre d'exemples, non limitatifs. Aux dessins annexés:
- la figure 1 est une vue schématique en coupe axiale d'un feu selon un premier mode de réalisation de l'invention ;
- la figure 2 est une courbe représentant l'allure de la transmittance tau du filtre du feu de la figure 1 en fonction de la longueur d'onde lambda du rayonnement ;
- les figures 3 et 4 sont des vues analogues aux figures 1 et 2 pour un deuxième mode préféré de réalisation
- la figure 5 est une vue schématique en coupe axiale d'un troisième mode de réalisation qui ne fait pas partie de l'invention ;
- la figure 6 est une vue en coupe axiale d'un feu selon l'invention, illustrant un agencement avantageux de chacun des trois modes précités ; et
- la figure 7 est une vue schématique d'un système d'aide à la vision nocturne selon l'invention.

Dans les trois modes de réalisation qui vont suivre, le dispositif 2 est une lanterne avant de véhicule automobile, assurant la fonction feu de position.

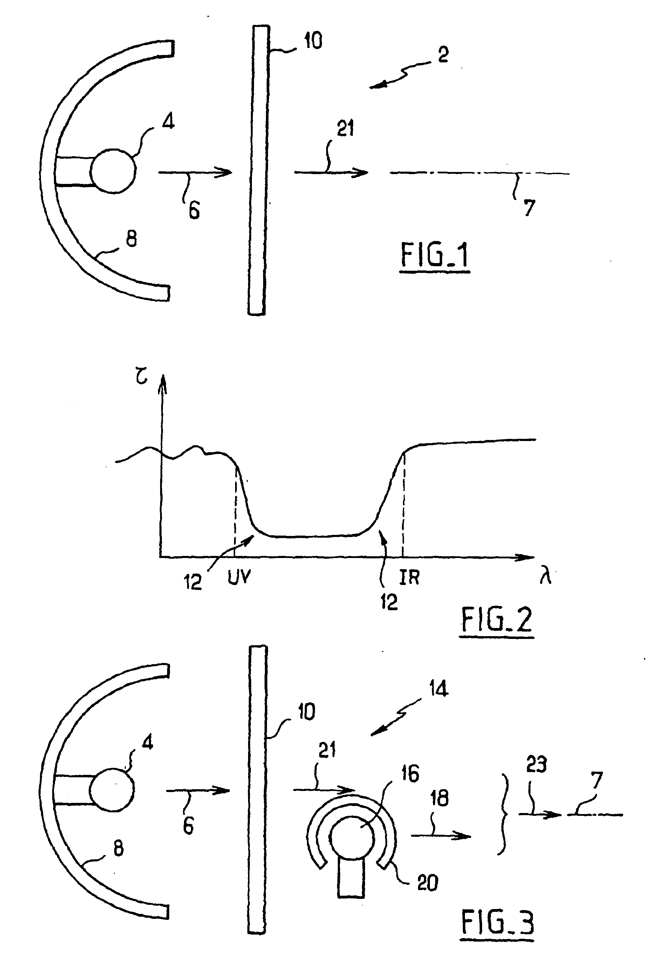

En référence aux figures 1 et 2, un premier mode de réalisation du feu 2 de l'invention comporte une lampe classique 4 adaptée à émettre, notamment dans l'axe 7 du feu un rayonnement 6 comprenant une partie visible blanche et une partie infrarouge. La lampe est ici une lampe de projecteur émettant dans l'axe 7 du feu et dans la plage 800-1200 nm une intensité infrarouge supérieure à 80 W/sr. Le feu comporte un réflecteur 8 à un foyer duquel se trouve la lampe 4. Le feu comporte un filtre 10 disposé pour recevoir la totalité du rayonnement 6 émis directement par la lampe 4 ou renvoyé par le réflecteur 8. Comme le montre le diagramme de la figure 2 illustrant la transmittance tau du filtre 10 en fonction de la longueur d'onde lambda, le filtre 10 est choisi pour supprimer une grande partie de la lumière visible du rayonnement 6. If transmet l'infrarouge IR, l'ultraviolet UV, ainsi que des rayonnements visibles proches du bleu et du rouge (fuites bleues et rouges 12) et un rayonnement visible de fond jaune-vert entre ceux-ci. Dans l'axe 7 du feu, l'intensité du rayonnement visible transmis par le filtre 10 est d'environ 50 Cd, (la limite supérieure autorisée dans l'axe pour une lanterne est de 60 Cd).

Le feu 2 est agencé de sorte que l'ensemble du rayonnement visible 21 transmis par le filtre 10 réalise une synthèse située dans la colorimétrie autorisée pour la fonction feu de position. Cette fonction est donc, remplie par les fuites visibles du filtre 10. Ainsi, en fonctionnement, le filtre 10 transmet un rayonnement infrarouge important ainsi qu'une lumière blanche assurant la fonction feu de position. On pourra par exemple utiliser pour le filtre 10 un filtre coupe-bande réalisable en filtre multicouches interférentiel de manière connue.

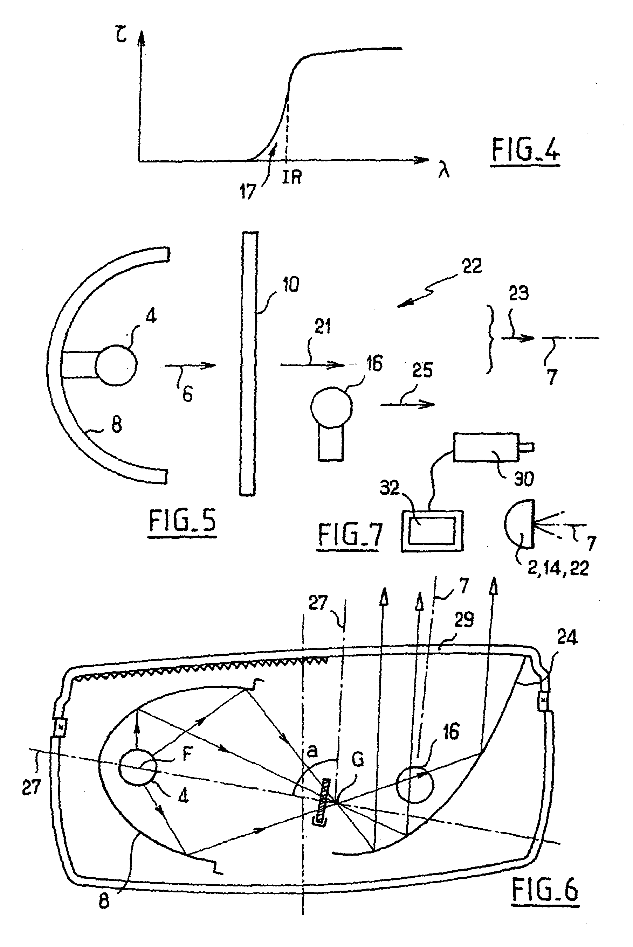

En référence aux figures 3 et 4, le deuxième mode de réalisation du feu 14 présente la même constitution générale. La source 4 est une lampe de projecteur semblable à celle du premier mode. Le filtre 10 transmet encore l'infrarouge en retenant la plus grande partie du rayonnement visible mais présente cette fois essentiellement une fuite 17 dans le rouge, provenant du bas de la coupure, comme le montre le diagramme de la figure 4. Il s'agit ici d'un filtre passe-bas (en fréquence). Le feu 14 comporte une deuxième lampe 16 s'étendant en aval du filtre 10 par référence à la direction du rayonnement 6 de la première lampe 4. Cette deuxième lampe 16 produit une lumière blanche. Il s'agit d'une lampe de feu classique. Le feu comporte une bonnette colorée 20 associée à la deuxième lampe 16. La bonnette 20 est colorée dans une couleur complémentaire de la couleur de la lumière visible transmise par le filtre 10. Il s'agit ici d'un vert adapté.

La deuxième lampe 16 et la bonnette 20 constituent ainsi une deuxième source produisant un rayonnement 18. La couleur de la bonnette 20 est choisie de sorte que la synthèse de la lumière visible du rayonnement 21 transmis par le filtre 10 et de la lumière visible du rayonnement 18 transmis par la bonnette 20 constitue une lumière blanche 23 acceptable pour la fonction de la lanterne. Dans ce mode de réalisation, on peut utiliser un filtre 10 passe-bas peu performant. Dans ce mode de réalisation, c'est l'intensité du rayonnement visible dans l'axe 7 provenant de la source 4 via le filtre 10 et de la source 16 via la bonnette qui sera d'environ 50 Cd. Par ailleurs, l'intensité des fuites dans l'axe 7 est très supérieure à celle des fuites latérales en raison du caractère "pointu" du faisceau infrarouge. Il sera donc avantageux de réaliser la bonnette 20 avec des transmittances tenant compte de cette répartition, sous peine d'avoir une mauvaise colorimétrie sur les points latéraux. En complément ou alternativement, on pourra employer une bonnette optiquement directive, dirigeant le faisceau dans la direction souhaitée pour l'éclairage infrarouge. On obtient ainsi une meilleure superposition des deux faisceaux.

En référence à la figure 5, dans le troisième mode de réalisation, qui ne fait pas partie de l'invention, le feu 22 est proche de celui du deuxième mode. Il est dépourvu de bonnette associée à la deuxième lampe 16. Ici, la lampe blanche 16 émet (par référence à un diagramme trichromatique) à la limite du blanc réglementaire dans la direction de la couleur complémentaire des fuites visibles du filtre 10 avec le flux maximum autorisé. On choisit le filtre 10 et la deuxième lampé 20 de sorte que : lorsque la deuxième lampe 16 seule est activée, elle fournit à elle seule une lumière blanche 25 de colorimétrie et d'intensité acceptables pour la fonction; et lorsque les'deux lampes 4 et 16 sont activées, la synthèse de la lumière visible 21 transmise par le filtre 10 et de la lumière blanche 25 de la deuxième lampe 16 constitue elle aussi une lumière blanche 23 acceptable pour la fonction et d'intensité dans l'axe d'environ 50 Cd. Ainsi, les fuites visibles du filtre 10 sont "noyées" dans le blanc de la fonction. Le feu émet alors un rayonnement infrarouge ayant dans l'axe 7 du feu et dans la plage 800 nm-1200 nm une intensité d'environ 90 W/sr. Toutefois, la deuxième lampe 16 pourra ici aussi être associée à une bonnette.

Dans les modes de réalisation 1 et 2, le feu fonctionne en tout ou rien. Autrement dit, soit le feu est éteint, soit le feu produit en même temps le rayonnement infrarouge et le rayonnement visible de la fonction. Ainsi, on permet un réglage fin de la colorimétrie et on offre un grand choix de filtres peu onéreux. Dans le mode de réalisation 3, le feu peut fournir en même temps un rayonnement blanc et un rayonnement infrarouge lorsque les deux lampes 4, 16 sont activées. Mais aussi, le feu peut fournir le blanc de la fonction sans le rayonnement infrarouge issu du filtre 10, lorsque la deuxième lampe 16 est seule activée. Autrement dit, le flux infrarouge 6 de la première lampe 4 vient à la demande se superposer à la deuxième lampe 20. On évite alors une surconsommation électrique.

Dans chacun de ces trois modes de réalisation, (dont le troisième qui ne fait pas partie de l'invention), on pourra utiliser un agencement du feu tel que celui de la figure 6. Le réflecteur 8 est un réflecteur ellipsoïdal connu en soi à un foyer interne F duquel est placée la lampe 4. Le filtre 10 est placé à un foyer externe 6 de ce réflecteur 8, sur le foyer, en amont (comme illustré) ou en aval de celui=ci. Le feu comporte un deuxième réflecteur 24, paraboloïdal lui, disposé de sorte qu'un foyer interne de ce réflecteur 24 coïncide sensiblement avec le foyer externe 6 du réflecteur ellipsoïdal 8. Les deux réflecteurs. 8, 24 ont des axes 27 formant un angle a l'un par rapport à l'autre. Le réflecteur ellipsoïdal 8 est ouvert en direction du réflecteur paraboloïdal 24, lequel est ouvert vers le réflecteur ellipsoïdal 8 et vers une fenêtre 29 du feu pour la sortie du faisceau. La deuxième lampe 16, le cas échéant, est par exemple placée en regard du réflecteur paraboloïdal 24, dans une trajectoire du rayonnement venant de la première lampe 4, transmis par le filtre 10 et réfléchi par le réflecteur paraboloïdal 24.

Les rayons issus de la première lampé 4 sont réfléchis par le réflecteur ellipsoïdal 8, traversent le filtre 10, sont réfléchis par le réflecteur paraboloïdal 24, puis sortent par la fenêtre 29 du feu. Le cas échéant, se mêlent à eux les rayons émergeant de la deuxième lampe 16.

Cet agencement permet de donner au feu un aspect traditionnel, offrant à la vue seulement le réflecteur paraboloïdal 24 et, le cas échéant, la deuxième lampe 16.

Dans chacun de ces modes de réalisation, le feu fait office de dispositif d'éclairage infrarouge. En référence à la figure 7, il peut être intégré à un système d'aide à la vision nocturne d'un type connu en soi comprenant le feu 2, 14, 22, une caméra 30 sensible à l'infrarouge et un dispositif 32 d'affichage pour le conducteur de l'image reçue par la caméra.

On pourra avantageusement dissimuler le feu derrière une glace fumée transparente au rayonnement infrarouge.

## Revendications

1. Dispositif de signalisation (2; 14; 22), tel qu'un feu, ou dispositif d'éclairage infrarouge (2; 14; 22), tel qu'un projecteur pour véhicule, comportant au moins une source de rayonnement (4) et un filtre (10), le dispositif étant adapté à émettre suivant un axe (7) du dispositif un rayonnement blanc et infrarouge (21 ; 23) dans une plage de longueur d'onde située entre 800 et 1200 nm, le rayonnement blanc ayant une intensité inférieure à 2000 Cd, **caractérisé en ce que** la source (4) et le filtre (10) sont choisis de sorte que le rayonnement infrarouge a une intensité supérieure à 25 W/sr, et **en ce que** la source (4) est l'unique source de rayonnement du dispositif.

2. Dispositif de signalisation (2; 14; 22), tel qu'un feu, ou dispositif d'éclairage infrarouge (2; 14; 22), tel qu'un projecteur pour véhicule, comportant au moins une source de rayonnement (4) et un filtre (10), le dispositif étant adapté à émettre suivant un axe (7) du dispositif un rayonnement blanc et infrarouge (21 ; 23) dans une plage de longueur d'onde située entre 800 et 1200 nm, le rayonnement blanc ayant une intensité inférieure à 2000 Cd, **caractérisé en ce que** la source (4) et le filtre (10) sont choisis de sorte que le rayonnement infrarouge a une intensité supérieure à 25 W/sr, **en ce que en ce que** la source (4) étant une première source, le dispositif comporte une deuxième source de rayonnement (16), le dispositif étant agencé de sorte que la synthèse d'une lumière visible (21) de la première source (4) transmise par le filtre (10) et d'une lumière visible (18 ; 25) de la deuxième source (16) constitue une lumière blanche (23), et **en ce que** la lumière visible (18) de la deuxième source (16) est complémentaire de la lumière visible (21) transmise par le filtre (10).

3. Dispositif selon la revendication précédente, **caractérisé en ce que** la deuxième source (16) comporte un filtre coloré (20).

4. Dispositif selon l'une quelconque des revendications précédentes, **caractérisé en ce qu'**il comporte un réflecteur ellipsoïdal (8), la source (4) étant placée à un foyer interne (F) du réflecteur.

5. Dispositif selon la revendication précédente, **caractérisé en ce qu'**il comporte un réflecteur paraboloïdal (24) disposé de sorte qu'un foyer interne du réflecteur paraboloïdal est placé à un foyer externe (6) du réflecteur ellipsoïdal (8).

6. Dispositif selon la revendication précédente, **caractérisé en ce que** la deuxième source (16) est placée dans une trajectoire du rayonnement transmis par le filtre (10) et réfléchi par le réflecteur paraboloïdal (8).

7. Dispositif selon l'une quelconque des revendications précédentes, **caractérisé en ce qu'**il est destiné à être placé à l'avant d'un véhicule.

8. Système d'aide à la vision nocturne pour véhicule, comportant un dispositif émetteur (2; 14; 22) adapté à émettre un rayonnement infrarouge, une caméra sensible à l'infrarouge (30) et des moyens d'affichage (32) d'un signal reçu par la caméra, **caractérisé en ce que** le dispositif émetteur est un dispositif de signalisation ou d'éclairage conforme à l'une des revendications précédentes.

## Claims

1. Signalling device (2; 14; 22) such as a lamp, or infrared lighting device (2; 14; 22), such as a vehicle headlight, comprising at least one source of radiation (4) and a filter (10), the device being able to emit according to an axis (7) of the device white and infrared radiation (21; 23) in a wavelength range which is situated between 800 and 1200 nm, the white radiation having intensity which is less than 2000 Cd, **characterised in that** the source (4) and the filter (10) are selected such that the infrared radiation has intensity greater than 25 W/sr, and **in that** the source (4) is the only source of radiation or the device.

2. Signalling device (2; 14; 22) such as a lamp, or infrared lighting device (2; 14; 22), such as a vehicle headlight, comprising at least one source of radiation (4) and a filter (10), the device being able to emit according to an axis (7) of the device white and infrared radiation (21; 23) in a wavelength range which is situated between 800 and 1200 nm, the white radiation having intensity which is less than 2000 Cd, **characterised in that** the source (4) and the filter (10) are selected such that the infrared radiation has intensity greater than 25 W/sr, and **in that** the source (4) being a first source, the device comprises a second source of radiation (16), the device being arranged such that the synthesis of a visible light (21) of the first source (4) transmitted by the filter (10) and of a visible light (18; 25) of the second source (16) constitutes a white light (23), and **in that** the visible light (18) of the second source (16) is complementary to the visible light (21) which is transmitted by the filter (10).

3. Device according to the preceding claim, **characterised in that** the second source (16) comprises a coloured filter (20).

4. Device according to any one of the preceding claims, **characterised in that** it comprises an ellipsoidal reflector (8), the source (4) being placed at an internal focal point (F) of the reflector.

5. Device according to the preceding claim, **characterised in that** it comprises a paraboloidal reflector (24) which is disposed such that an internal focal point of the paraboloidal reflector is placed at an external focal point (6) of the ellipsoidal reflector (8).

6. Device according to the preceding claim, **characterised in that** the second source (16) is placed on a trajectory of the radiation which is transmitted by the filter (10) and is reflected by the paraboloidal reflector (8).

7. Device according to any one of the preceding claims, **characterised in that** it is designed to be placed at the front of a vehicle.

8. System to assist night-time vision for a vehicle, comprising an emitter device (2; 14; 22) which is designed to emit infrared radiation, a camera (30) which is sensitive to infrared, and means (32) for displaying a signal received by the camera, **characterised in that** the emitter device is a signalling or lighting device according to one of the preceding claims.

## Patentansprüche

1. Signalgebungsvorrichtung (2; 14; 22), etwa eine Leuchte, oder Infrarot-Beleuchtungsvorrichtung (2; 14; 22), etwa ein Kraftfahrzeugscheinwerfer, mit wenigstens einer Strahlungsquelle (4) und einem Filter (10), wobei die Vorrichtung längs einer Achse (7) der Vorrichtung eine weiße und infrarote Strahlung (21; 23) in einem Wellenlängenbereich zwischen 800 und 1200 nm zu emittieren vermag, wobei die weiße Strahlung eine Strahlungsintensität von weniger als 2000 Cd hat, **dadurch gekennzeichnet, dass** die Strahlungsquelle (4) und der Filter (10) so gewählt sind, dass die Infrarot-Strahlung eine Intensität von mehr als 25 W/sr hat, und dass die Strahlungsquelle (4) die einzige Strahlungsquelle der Vorrichtung ist.

2. Signalgebungsvorrichtung (2; 14; 22), etwa eine Leuchte, oder Infrarot-Beleuchtungsvorrichtung (2; 14; 22), etwa ein Kraftfahrzeugscheinwerfer, mit wenigstens einer Strahlungsquelle (4) und einem Filter (10), wobei die Vorrichtung längs einer Achse (7) der Vorrichtung eine weiße und infrarote Strahlung (21; 23) in einem Wellenlängenbereich zwischen 800 und 1200 nm zu emittieren vermag, wobei die weiße Strahlung eine Strahlungsintensität von weniger als 2000 Cd hat, **dadurch gekennzeichnet, dass** die Strahlungsquelle (4) und der Filter (10) so gewählt sind, dass die Infrarot-Strahlung eine Intensität von mehr als 25 W/sr hat, dass die Vorrichtung, weil die Strahlungsquelle (4) eine erste Strahlungsquelle ist, eine zweite Strahlungsquelle (16) umfasst, wobei die Vorrichtung so ausgebildet ist, dass aus der Synthese eines durch den Filter (10) übertragenen sichtbaren Lichts (21) der ersten Strahlungsquelle (4) und eines sichtbaren Lichts (18; 25) der zweiten Strahlungsquelle (16) ein weißes Licht (23) entsteht, und dass das sichtbare Licht (18) der zweiten Strahlungsquelle (16) zu dem durch den Filter (10) übertragenen sichtbaren Licht (21) komplementär ist.

3. Vorrichtung nach dem vorhergehenden Anspruch,
**dadurch gekennzeichnet, dass** die zweite Strahlungsquelle (16) einen Farbfilter (20) umfasst.

4. Vorrichtung nach einem der vorhergehenden Ansprüche,
**dadurch gekennzeichnet, dass** sie einen Ellipsoid-Reflektor (8) umfasst, wobei die Strahlungsquelle (4) in einem inneren Brennpunkt (F) des Reflektors angeordnet ist.

5. Vorrichtung nach dem vorhergehenden Anspruch,
**dadurch gekennzeichnet, dass** sie einen Paraboloid-Reflektor (24) umfasst, der solchermaßen angeordnet ist, dass ein innerer Brennpunkt des Paraboloid-Reflektors in einem äußeren Brennpunkt (6) des Ellipsoid-Reflektors (8) angeordnet ist.

6. Vorrichtung nach dem vorhergehenden Anspruch,
**dadurch gekennzeichnet, dass** die zweite Strahlungsquelle (16) im Strahlengang der durch den Filter (10) übertragenen und durch den Paraboloid-Reflektor (8) reflektierten Strahlung angeordnet ist.

7. Vorrichtung nach einem der vorhergehenden Ansprüche,
**dadurch gekennzeichnet, dass** sie dazu bestimmt ist, an der Vorderseite eines Fahrzeugs platziert zu sein.

8. Nachtsichtassistenzsystem für Fahrzeuge mit einer Emittiervorrichtung (2; 14; 22), die eine Infrarot-Strahlung auszusenden vermag, einer infrarotempfindlichen Kamera (30) und Mitteln (32) zur Anzeige eines von der Kamera empfangenen Signals,
**dadurch gekennzeichnet, dass** die Emittiervorrichtung eine Signalgebungs- oder Beleuchtungsvorrichtung nach einem der vorhergehenden Ansprüche ist.
